# EUROPÄISCHE PATENTANMELDUNG

(11) **EP 2 218 536 A1**
(43) Veröffentlichungstag der Anmeldung: **18.08.2010**
(21) Anmeldenummer: 10152591.3
(22) Anmeldetag: 04.02.2010
(51) Int. Cl.: B23G 7/00, B23G 1/00, B23G 7/02

(54) **Verfahren zur Ausformung eines Innengewindes an einem Grundkörper**

(30) Priorität: 16.02.2009 DE 102009000891
(71) Anmelder: HILTI Aktiengesellschaft, 9494 Schaan (LI)
(72) Erfinder: Wissling, Matthias, 9000, St. Gallen (CH); Schäffer, Marc, 6800, Feldkirch-Nofels (AT)
(74) Vertreter: Söllner, Oliver

(57) **Zusammenfassung**

Die Erfindung betrifft ein Verfahren zur Ausformung eines Innengewindes (27) an einem Grundkörper (31), wobei zuerst ein Gewindewerkzeug (11), das bereichsweise zumindest einen Abschnitt (16) mit gewindeausbildenden Mitteln (18) aufweist, in eine Öffnung (32) im Grundkörper (31) eingeführt wird und anschliessend durch eine Rotation des Gewindewerkzeugs (11) von maximal 360° das gesamte Innengewinde (27) in dem Grundkörper (31) ausgebildet wird. Weiter betrifft die Erfindung ein Gewindewerkzeug (11) zur Durchführung des Verfahrens.

## Beschreibung

Die Erfindung betrifft ein Verfahren zur Ausformung eines Innengewindes an einem Grundkörper, der im Oberbegriff des Patentanspruchs 1 genannten Art. Die Erfindung betrifft weiter ein Gewindewerkzeug zur Durchführung des Verfahrens.

Zur Ausbildung eines Innengewindes an einem Hülsengrundkörper, z. B. zum Herstellen einer Innengewindehülse oder eines Innengewindes in einem Bauteil, sind gewindeschneidende sowie gewindeformende Verfahren bekannt.

Beim spanenden Gewindeschneiden, wie es z. B. in der US 5,993,120 beschrieben ist, wird als Gewindewerkzeug ein Gewindeschneider, der gewindeschneidende Abschnitte sowie zumindest eine Schneidkante aufweist, in eine zuvor ausgebildete Öffnung im Bauteil eingeführt und fortlaufend rotiert, wobei das Innengewinde in die Wandung der Öffnung geschnitten wird.

Nachteilig an der bekannten Lösung ist, dass die Ausbildung des Innengewindes zeit- und kostenintensiv ist, da der Gewindeschneider vom Anfang bis zum Ende der Gewindelänge verfahren werden muss.

Aus der US 5,607,005 sind ein gewindeformendes Verfahren sowie als Gewindewerkzeug ein Gewindeformer bekannt, bei dem die Ausbildung des Innengewindes spanlos erfolgt. Bei diesem Verfahren wird das Material im Bereich des Innengewindes verfestigt.

Nachteilig an der bekannten Lösung ist, dass die Ausbildung des Innengewindes zeit- und kostenintensiv ist, da auch hier der Gewindeformer vom Anfang bis zum Ende der Gewindelänge verfahren werden muss.

Aufgabe der Erfindung ist es, ein Verfahren und ein Gewindewerkzeug zur Ausbildung eines Innengewindes an einem Grundkörper zu schaffen, das eine wirtschaftlichere Herstellung desselben ermöglicht.

Die Aufgabe ist durch die Merkmale der unabhängigen Ansprüche gelöst. Vorteilhafte Weiterbildungen sind in den Unteransprüchen dargelegt.

Gemäss dem erfindungsgemässen Verfahren wird zur Ausformung eines Innengewindes an einem Grundkörper zuerst ein Gewindewerkzeug, das bereichsweise zumindest einen Abschnitt mit gewindeausbildenden Mitteln aufweist, in eine Öffnung im Grundkörper eingeführt und anschliessend durch eine Rotation des Gewindewerkzeugs von maximal 360° das gesamte Innengewinde in dem Grundkörper ausgebildet.

Das Gewindewerkzeug zur Ausformung des Innengewindes fährt direkt bis an das Ende der zu erstellenden Gewindelänge in die Öffnung im Grundkörper ein. Die Öffnung ist beispielsweise eine Bohrung oder ein von einer Wandung begrenzter Innenraum des Grundkörpers. Die Abschnitte mit den gewindeausbildenden Mitteln sind beispielsweise im Grundriss Kreisabschnitte, deren Zentrum ausserhalb der Längsachse beziehungsweise des Zentrums des Schafts liegt. Die gewindeausbildenden Mittel sind aus mehreren, parallel zueinander und in axialer Richtung des Schafts beziehungsweise der Einführrichtung hintereinander angeordnete Elemente gebildet. Da das gesamte Innengewinde lediglich durch eine Rotation des eingeführten Gewindewerkzeugs um einen Winkelbereich erstellt wird, der kleiner als eine Volldrehung von 360° ist, ist gegenüber den bisherigen Verfahren eine signifikante Taktzeitreduktion bei der Gewindeherstellung möglich. Damit lassen sich beispielsweise Innengewindehülsen in weit einfacherer und wirtschaftlicherer Weise herstellen.

Muss ein sehr langes Innengewinde erstellt werden, wird das Gewindewerkzeug mit seiner ganzen axialen Länge in die Öffnung eingeführt, rotiert und anschliessend um den Betrag seiner mit den gewindeausbildenden Mitteln versehenen axialen Länge weiter in die Öffnung versetzt und anschliessend erneut rotiert, bis die Gesamtlänge des Innengewindes erreicht ist. Damit lässt sich auch bei langen Innengewinden mit dem erfindungsgemässen Verfahren eine massgebliche Taktzeitreduktion realisieren.

Vorzugsweise weist das Gewindewerkzeug mehrere in einer Rotationssymmetrie ganzzahliger Ordnung angeordnete Abschnitte mit gewindeausbildenden Mitteln auf und das Gewindewerkzeug wird um einen Rotationswinkel rotiert, der dem Wert des Quotienten eines Vollkreises durch die Anzahl der Abschnitte mit den gewindeausbildenden Mitteln des Gewindewerkzeugs entspricht. Weist das Gewindewerkzeug beispielsweise drei Abschnitte mit gewindeausbildenden Mitteln auf, sind diese jeweils in einem Winkelbereich von 120° zueinander beabstandet und das Gewindewerkzeug wird zur Ausbildung des Innengewindes nach dem Einführen in den Grundkörper entsprechend um 120° rotiert. Weist das Gewindewerkzeug beispielsweise vier Abschnitte mit gewindeausbildenden Mitteln auf, beträgt der Rotationswinkel des Gewindewerkzeugs zur Ausbildung des Innengewindes entsprechend 90°.

Bevorzugt werden vor dem Einführen des Gewindewerkzeugs in der Innenwandung des Grundkörpers in einer Rotationssymmetrie ganzzahliger Ordnung angeordnete Ausnehmungen vorgesehen, deren Anzahl der Anzahl der Abschnitte mit den gewindeausbildenden Mitteln am Gewindewerkzeug entspricht und deren Ausgestaltung auf die Ausgestaltung der Abschnitte mit den gewindeausbildenden Mitteln am Gewindewerkzeug abgestimmt ist. Beim Einführen des Gewindewerkzeugs dringen die Abschnitte mit den gewindeausbildenden Mitteln in diese Ausnehmungen im Grundkörper ein. Bei der anschliessenden Rotation des Gewindewerkzeugs wird das Material des Grundkörpers zwischen den Ausnehmungen zu dem Innengewinde ausgeformt. Die mittels dieses Verfahrens hergestellten Gewindegänge sind unterbrochen und somit nicht durchgehend. Die Länge dieser Unterbrechungen lassen sich durch eine entsprechende Abstimmung der Ausgestaltung der Ausnehmungen im Grundkörper mit der Ausgestaltung der Abschnitte des Gewindewerkzeugs, welche die gewindeausbildenden Mittel aufweisen, auf einen sehr kurzen Bereich reduzieren.

Vorzugsweise wird das Innengewinde spanend in dem Grundkörper ausgebildet, was eine exakte Ausbildung der Gewindegänge ermöglicht. Vorteilhaft werden die bei diesem Verfahren anfallenden Späne durch Zuführung eines Fluids, wie beispielsweise einer Spülflüssigkeit, während dem Gewindeschneidens entfernt.

Alternativ wird das Innengewinde spanlos in dem Grundkörper ausgebildet, wobei das Material im Bereich der erstellten Gewindegänge verfestigt wird und somit das erstellte Innengewinde hohe Lastwerte aufweist. Zudem fällt beim Gewindefurchen gegenüber dem Gewindeschneiden kein Materialverlust des Grundkörpers an, womit beispielsweise der Kerndurchmesser eines hülsenförmigen Grundkörpers grösser als beim einem in einem spanenden Verfahren hergestellten Innengewinde ausgeführt werden kann beziehungsweise womit Material des Grundkörpers einsparbar ist.

Ein erfindungsgemässes Gewindewerkzeug zur Ausformung eines Innengewindes an einem Grundkörper weist einen Schaft, der einen Aussendurchmesser aufweist, und eine an dem Schaft angeordnete gewindeausbildende Einrichtung auf. Die gewindeausbildende Einrichtung weist mehrere umfänglich zueinander beabstandete, in einer Rotationssymmetrie ganzzahliger Ordnung angeordnete Abschnitte auf, welche den Aussendurchmesser des Schafts überragen und welche gewindeausbildende Mittel an ihrer Aussenseite aufweisen.

Die gewindeausbildenden Mittel sind entlang der axialen Länge der am Schaft vorgesehenen, an den den Aussendurchmesser des Schafts überragenden Abschnitte vorgesehen. Dieses Gewindewerkzeugs ist besonders vorteilhaft mit dem vorgenannten Verfahren anwendbar.

Vorzugsweise liegt das Zentrum eines Hüllkreises der Abschnitte mit den gewindeausbildenden Mitteln ausserhalb des Aussendurchmessers des Schafts, womit die Abschnitte mit ihrem grössten Teil ausserhalb des Aussendurchmessers des Schafts zu liegen kommen. Bei der Ausbildung des Innengewindes steht somit ein grosser Flächenteil dieser Abschnitte zur Verfügung, womit Spannungsspitzen und damit Schäden im Material des Grundkörpers weitgehend vermieden werden.

Bevorzugt sind die gewindeausbildenden Mittel über den gesamten, des den Aussendurchmesser des Schafts überragenden Aussenumfangs der Abschnitte vorgesehen, womit eine vorteilhafte Krafteinleitung in das Gewindewerkzeug sowie in das Material des Grundkörpers gewährleistet wird. Vorteilhaft verlaufen die gewindeausbildenden Mittel kreisförmig und enden weiter vorteilhaft an der Aussenseite des Schafts.

Vorzugsweise ist das Gewindewerkzeug ein Gewindeformer, welcher eine einfache spanlose Ausbildung des Innengewindes gewährleistet.

Die Erfindung wird nachstehend anhand von Ausführungsbeispielen näher erläutert. Es zeigen:
- Fig. 1: Einen ersten Verfahrensschritt des erfindungsgemässen Verfahrens in Seitenansicht;
- Fig. 2: einen weiteren Verfahrensschritt des erfindungsgemässen Verfahrens in Seitenansicht;
- Fig. 3: ein Gewindewerkzeug in Aufsicht;
- Fig. 4: ein Grundkörper, an dem ein Innengewinde ausgeformt werden soll, in Aufsicht;
- Fig. 5: eine mit dem erfindungsgemässen Verfahren hergestellte Innengewindehülse in einer Perspektive; und
- Fig. 6: ein Teilquerschnitt durch die Innengewindehülse gem. Fig. 4.

Grundsätzlich sind in den Figuren gleiche Teile mit den gleichen Bezugszeichen versehen.

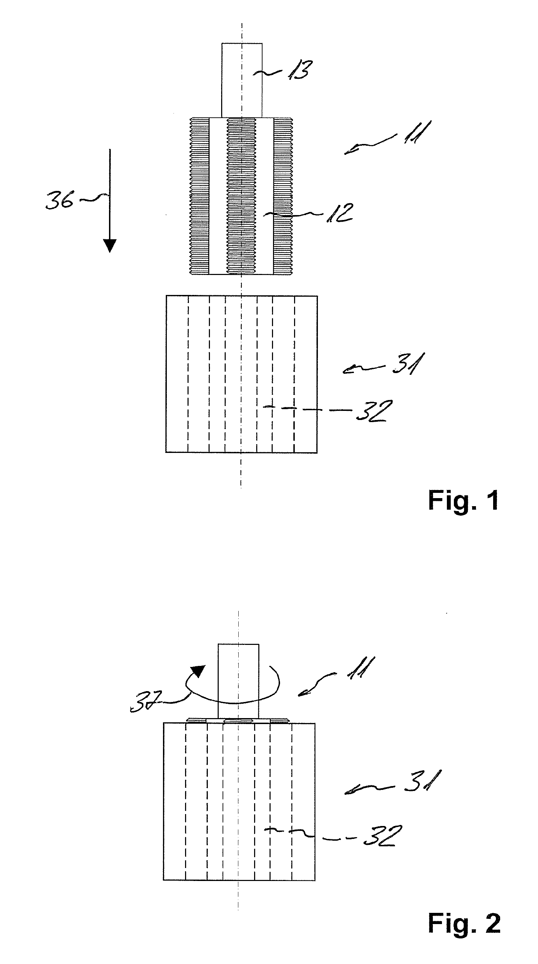

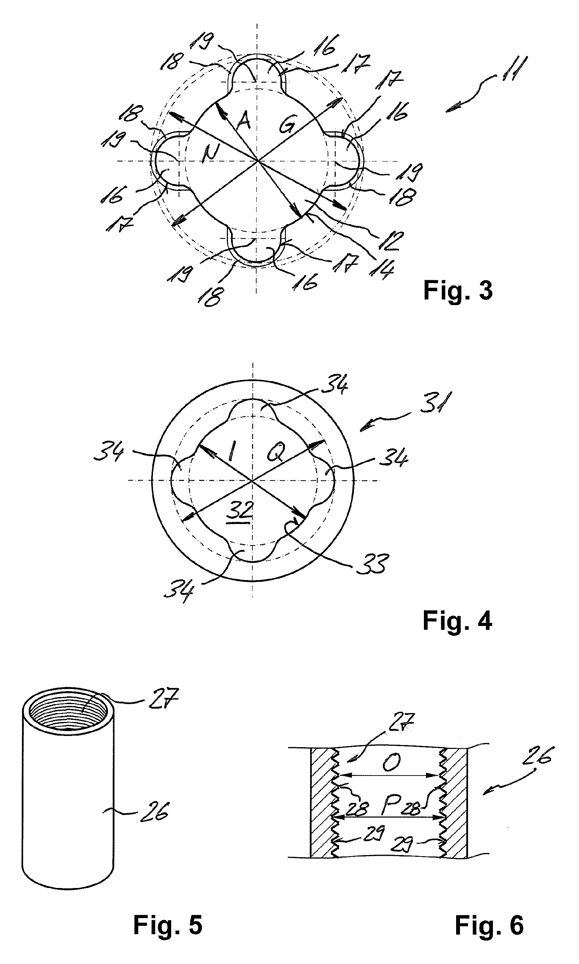

In den Figuren 1 und 3 ist ein Gewindewerkzeug 11 in Form eines Gewindeformers zur spanlosen Ausformung eines Innengewindes an einem Grundkörper 31 dargestellt. Das Gewindewerkzeug 11 weist einen Schaft 12 und daran anschliessend ein Einsteckende 13 zur Anordnung des Gewindewerkzeugs 11 an einer hier nicht dargestellten Maschine zur Betätigung des Gewindewerkzeugs 11 auf. Der Schaft 12 weist einen Aussendurchmesser A sowie eine an diesem angeordnete gewindeausbildende Einrichtung auf, die von vier umfänglich zueinander beabstandeten, in einer Rotationssymmetrie ganzzahliger Ordnung angeordneten Abschnitten 16 gebildet ist. Die Abschnitte 16 sind jeweils um 90° versetzt zueinander an der Aussenseite 14 des Schafts 12 vorgesehen.

Die Abschnitte 16 überragen die von dem Aussendurchmesser A definierte Aussenseite 14 des Schafts 12 und erstrecken sich im Wesentlichen über die gesamte Längserstreckung beziehungsweise die axiale Länge des Schafts 12. Weiter sind die Abschnitte 16 mit mehreren, in axialer Richtung des Schafts 12 an den Abschnitten 16 parallel zueinander angeordneten gewindeausbildenden Mitteln 18 an ihrer Aussenseite 17 versehen. Die gewindeausbildende Mittel 18 weisen die Negativform der auszuformenden Gewindegänge auf. Das Zentrum 19 eines Hüllkreises der Abschnitte 16 mit den gewindeausbildenden Mitteln 18 liegt ausserhalb des Aussendurchmessers A des Schafts 12. Die gewindeausbildenden Mittel 18 erstrecken sich über den gesamten, den Aussendurchmesser A des Schafts 12 überragenden Aussenumfang der Abschnitte 16 und verlaufen im Grundriss im Wesentlichen kreisförmig. Die gewindeausbildenden Mittel 18 sind jeweils bis an die Aussenseite 14 des Schaftes 12 geführt.

Der maximale Aussendurchmesser des Gewindewerkzeugs 11 entspricht dem Durchmesser G des Hüllkreises, der die gewindeausbildenden Mittel 18 umgibt. Der die Abschnitte 16, welche die gewindeausbildenden Mittel 18 aufweisen, umgebende Hüllkreis weist einen Durchmesser auf, der mit N bezeichnet ist.

In den Figuren 5 und 6 ist eine Innengewindehülse 26 mit einem Innengewinde 27 in ihrem Inneren dargestellt, das mit einem zuvor beschriebenen Gewindewerkzeugs 11 hergestellt ist. Der Abstand O einander gegenüberliegenden Gewindespitzen 28 des Innengewindes 27 entspricht dem Durchmesser N des Hüllkreises, der die Abschnitte 16 des Gewindewerkzeugs 11 umgibt, welche die gewindeausbildenden Mittel 18 aufweisen. Der Abstand P einander gegenüberliegenden Gewindegründe 29 des Innengewindes 27 entspricht dem Durchmesser G des die gewindeausbildenden Mittel 18 umgebenden Hüllkreises beziehungsweise dem maximalen Aussendurchmesser des Gewindewerkzeugs 11.

Der Grundkörper 31, der mit einem Innengewinde versehen werden soll, ist in der Figur 4 dargestellt. Der Grundkörper 31 ist hülsenförmig und weist eine durchgehende, sich über seine gesamte Längserstreckung verlaufende Öffnung 32 auf. Der Innendurchmesser I der Öffnung 32 entspricht dem 1.05- bis 1.1-fachen des Aussendurchmessers A des Schafts 12 des Gewindewerkzeugs 11.

In der Innenwandung 33 des Grundkörpers 31 sind vier in einer Rotationssymmetrie ganzzahliger Ordnung angeordnete Ausnehmungen 34 vorgesehen, so dass deren Anzahl der Anzahl der Abschnitte 16 mit den gewindeausbildenden Mitteln 18 am Gewindewerkzeug 11 entspricht und deren Ausgestaltung auf die Ausgestaltung der Abschnitte 16 mit den gewindeausbildenden Mitteln 18 am Gewindewerkzeug 11 abgestimmt ist. Der grösste Abstand Q zweier Ausnehmungen 34 entspricht dem 1.05- bis 1.1-fachen des maximalen Aussendurchmessers G des Gewindewerkzeugs 11.

In den Figuren 1 und 2 ist das erfindungsgemässe Verfahren zur Ausformung des Innengewindes 27 an dem Grundkörper 31 dargestellt. Zuerst wird das Gewindewerkzeug 11 vollständig in Richtung des Pfeils 36 versetzt und dabei in die Öffnung 32 im Grundkörper 31 eingeführt (Fig. 1).

Anschliessend wird durch eine Rotation des Gewindewerkzeugs in Richtung des Pfeils 37 von 90° das gesamte Innengewinde 27 in dem Grundkörper 31 ausgebildet (Fig. 2). Danach wird das Gewindewerkzeug 11 entgegen der Richtung des Pfeils 36 wieder aus dem Grundkörper 31 herausgefahren, womit die Innengewindehülse 26 gefertigt ist.

Alternativ ist das Gewindewerkzeug als Gewindeschneider ausgebildet, womit das Innengewinde spanend in dem Grundkörper ausgebildet wird. Ein derartiges Gewindewerkzeug weist neben den gewindeausbildenden Mitteln 18 vorteilhaft zusätzlich Schneidkanten auf.

## Patentansprüche

1. Verfahren zur Ausformung eines Innengewindes (27) an einem Grundkörper (31), wobei zuerst ein Gewindewerkzeug (11), das bereichsweise zumindest einen Abschnitt (16) mit gewindeausbildenden Mitteln (18) aufweist, in eine Öffnung (32) im Grundkörper (31) eingeführt wird und
anschliessend durch eine Rotation des Gewindewerkzeugs (11) von maximal 360° das gesamte Innengewinde (27) in dem Grundkörper (31) ausgebildet wird.

2. Verfahren nach Anspruch 1, **dadurch gekennzeichnet, dass** das Gewindewerkzeug (11) mehrere in einer Rotationssymmetrie ganzzahliger Ordnung angeordnete Abschnitte (16) mit gewindeausbildenden Mitteln (18) aufweist und das Gewindewerkzeug (11) um einen Rotationswinkel rotiert wird, der dem Wert des Quotienten eines Vollkreises durch die Anzahl der Abschnitte (16) mit den gewindeausbildenden Mitteln (18) des Gewindewerkzeugs (11) entspricht.

3. Verfahren nach Anspruch 1 oder 2, **dadurch gekennzeichnet, dass** vor dem Einführen des Gewindewerkzeugs (11) in der Innenwandung (33) des Grundkörpers (31) in einer Rotationssymmetrie ganzzahliger Ordnung angeordnete Ausnehmungen (34) vorgesehen werden, deren Anzahl der Anzahl der Abschnitte (16) mit den gewindeausbildenden Mitteln (18) am Gewindewerkzeug (11) entspricht und deren Ausgestaltung auf die Ausgestaltung der Abschnitte (16) mit den gewindeausbildenden Mitteln (18) am Gewindewerkzeug (11) abgestimmt ist.

4. Verfahren nach einem der Ansprüche 1 bis 3, **dadurch gekennzeichnet, dass** das Innengewinde spanend in dem Grundkörper (31) ausgebildet wird.

5. Verfahren nach einem der Ansprüche 1 bis 3, **dadurch gekennzeichnet, dass** das Innengewinde (27) spanlos in dem Grundkörper (31) ausgebildet wird.

6. Gewindewerkzeug zur Ausformung eines Innengewindes (27) an einem Grundkörper (31) mit einem Schaft (12), der einen Aussendurchmesser (A) aufweist, und einer an dem Schaft (12) angeordneten gewindeausbildenden Einrichtung, **dadurch gekennzeichnet, dass** die gewindeausbildende Einrichtung mehrere umfänglich zueinander beabstandete, in einer Rotationssymmetrie ganzzahliger Ordnung angeordnete Abschnitte (16) aufweist, welche den Aussendurchmesser (A) des Schafts (12) überragen und welche gewindeausbildende Mittel (18) an ihrer Aussenseite aufweisen.

7. Gewindewerkzeug nach Anspruch 6, **dadurch gekennzeichnet, dass** das Zentrum (19) eines Hüllkreises der Abschnitte (16) mit den gewindeausbildenden Mitteln (18) ausserhalb des Aussendurchmessers (A) des Schafts (12) liegt.

8. Gewindewerkzeug nach Anspruch 6 oder 7, **dadurch gekennzeichnet, dass** die gewindeausbildenden Mittel (18) sich über den gesamten, den Aussendurchmesser (A) des Schafts (12) überragenden Aussenumfang der Abschnitte (16) erstrecken.

9. Gewindewerkzeug nach einem der Ansprüche 6 bis 8, **dadurch gekennzeichnet, dass** es ein Gewindeformer ist.
